# EUROPEAN PATENT SPECIFICATION

(11) **EP 2 513 208 B1**
(45) Date of publication and mention of the grant of the patent: **02.03.2016**
(21) Application number: 10796366.2
(22) Date of filing: 15.12.2010
(51) Int. Cl.: C08J 7/18, B32B 7/10, B32B 27/30, C09J 7/02, C09J 7/04, C09J 133/12, E04F 15/16

(54) **METHOD OF PRODUCING A SELF-ADHESIVE SURFACE ON A WALL OR FLOOR COVERING**
VERFAHREN ZUR HERSTELLUNG EINER HAFTFLÄCHE AUF EINEM WAND- ODER BODENBELAG
PROCÉDÉ DE PRODUCTION D'UNE SURFACE AUTO-ADHÉSIVE SUR UN REVÊTEMENT DE MUR OU DE SOL

(30) Priority: 16.12.2009 DE 102009059172
(43) Date of publication of application: 24.10.2012
(73) Proprietor: certoplast Vorwerk & Sohn GmbH, 42285 Wuppertal (DE)
(72) Inventor: RICHTER, Rolf, 33607 Bielefeld (DE); PEHL, Christian, 33790 Halle (DE); BALKE, Ulrich, Anton, 40489 Düsseldorf (DE)
(74) Representative: Nunnenkamp, Jörg
(86) International application number: PCT/EP2010/069770
(87) International publication number: WO 2011/073262

(56) References cited:
- DATABASE CA [Online] CHEMICAL ABSTRACTS SERVICE, COLUMBUS, OHIO, US; TAKAHASHI, KAZUHIRO: "Decorative sheets containing radically curable silicones", XP002627816, retrieved from STN Database accession no. 1996:428188 & JP 8 090729 A (DAI NIPPON PRINTING CO., LTD., JAPAN) 9 April 1996 (1996-04-09)
- DATABASE WPI Week 199228 Thomson Scientific, London, GB; AN 1992-229908 XP002627817, & JP 4 153284 A (NITTO DENKO CORP) 26 May 1992 (1992-05-26)

## Description

The present invention relates to a method of producing a self-adhesive surface on a wall covering or floor covering.

There are floor and wall coverings which have a self-adhesive surface. Such coverings are produced by coating at least one surface with an adhesive which is dissolved in a solvent. During the evaporation of the solvent the dissolved adhesive remains on the surface of the wall or floor covering.

EP 0 270 888 A2 discloses a wall or floor covering of this kind. In that case a pressure-sensitive adhesive based on rubber, EVA copolymer, polyacrylate or the like, in the form of a solution or dispersion, is applied to the surface of an intermediate layer.

EP 0 473 734 B1 discloses a floor covering to whose underside an adhesive layer is applied wet. After the adhesive layer has penetrated the surface, the adhesive is cured by evaporation of the solvent. This mode of application has disadvantages for the self-adhesive surface. Thus the adhesive is not resistant to cleaning products and is subjected to contraction effects. Moreover, when the wall and floor coverings are removed from the underground, residues of the adhesive often remain on said underground.

DE 39 35 097 A1 discloses a method of producing a thick layer of adhesive. The method discloses an Acrylate-based adhesive comprising a photoinitiator and a cross-linking agent, which is applied on a surface of a silicone sheet and which can be cured by means of radiation. This thick film can be applied on the underground. Following to this application of the thick film of adhesive, the silicone sheet can be removed from the adhesive film, that will remain completely on the underground. In contrast to this, an adhesive film which remains on the underground is not desired on a wall covering or a floor covering.

Well known are hotmelt adhesives, which are applied to a wall or floor covering in a heated, liquid state and cure thereon. Thus EP 0 909 850 describes a wall covering or a textile fabric web to which a self-adhesive layer of adhesive is applied with a polyurethane-based adhesion promoter. In that case, hotmelt adhesives are used as adhesion promoters. One of the disadvantages of such adhesives, however, is that, under pressure and at relatively high ambient temperatures, they are subjected to thermoplastic softening and deformation effects. Therefore, slapping noises may occur on floor coverings.

The closest prior art according to JP 8090729 A discloses the formation of a decorative sheet useful as wall or floor covering. This decorative sheet is produced by coating a PVC sheet with a composition comprising a coating and drying said coating with UV irradiation.

JP 4 153284 A deals with a pressure sensitive tape for surface protection, obtained by forming an adhesive layer together with crosslinking agents and a photo initiator onto a base material. The resulting tape is suitable as wall material and shows a balance combination of adhesion and peeling.

It is an object of the present invention to provide a method of producing a self-adhesive surface on a wall covering or floor covering which has improved properties in terms of the self-adhesive surface.

This object is achieved by a method of producing a self-adhesive surface on a wall or floor covering with the features of claim 1.

A method of producing a self-adhesive surface on a wall or floor covering comprises, in accordance with the invention, providing a wall or floor covering, providing a reactive fluid adhesive based on acrylate and/or on silicone, applying this adhesive to the surface of the wall or floor covering which is to be adhesively bonded to a base, spreading the adhesive on the surface and substrate-polymerizing the adhesive to give a pressure-sensitive adhesive received by chemical crosslinking by means of an initiator.

In the context of the invention, spreading the adhesive on the surface has to be understood as a distribution on the surface, as well as the penetration of the adhesive through the surface to a certain amount. Such a penetration does occur on smooth surfaces, such as silicone sheets, which are specially designed for the release of an adhesive layer from the substrate to a surface.

It is well known, that every wall covering and floor covering has a first surface having a décor and a second surface which is to be positioned face-to-face to the underground. In the context of the present invention this second surface of the wall or floor covering is to be adhesively bonded to a base, respectively an underground, for instance made of wood or concrete.

This produces a film of pressure-sensitive adhesive on the surface of the wall or floor covering that is inert to acid, alkali and solvents and which is temperature-stable and plasticizer-resistant. The wall and floor coverings can be stored even at relatively high temperatures. Furthermore, the method of the invention is more energy-efficient than other physical drying and curing methods known in the state of the art.

A wall or floor covering with a self-adhesive surface, produced in accordance with the method of the invention, is substantially dimensionally stable and can be detached from the base, respectively from the underground, without residue. As a result, for example, the wall or floor covering can be removed in the course of renovation work and laid again when this work has come to an end.

It is of advantage if the adhesive is applied substantially solvent-free to the surface of the wall or floor covering. Substantially solvent-free means, that the solvent content in the adhesive, which is not bound for example by drying agents, is less than 2% by weight, preferably less than 1 % by weight, most preferably less that 0.2% by weight. Consequently, there is only little or even no displacement between the layer of pressure-sensitive adhesive and the surface of the wall or floor covering, due to the lack of undesired contraction effects in the course of curing and a stronger attachment of the layer of pressure-sensitive adhesive to the surface of the wall or floor covering is produced, compared to application methods well known in the art.

It is of advantage, if the chemical crosslinking is initiated by radiation, more particularly IR and UV radiation, heat, induction and/or moisture, since by setting parameters, such as the intensity of irradiation, for example, it is possible to predetermine the degree of crosslinking of the adhesive to receive a pressure-sensitive adhesive, within a certain tolerance range.

In one embodiment of the method, it is of advantage, if the step of providing the adhesive of the method comprises the step of providing an acrylate-based and/or silicone-based base monomer formulation and subsequently these monomers undergo a further reaction, on exposure to UV irradiation, to give prepolymers. Crosslinking of these prepolymers as reactive intermediates may be made possible, following their provision as an adhesive, by just a small input of energy.

The number and nature of the prepolymers formed may be controlled advantageously by application of subatmospheric pressure.

It is possible, following the reaction for the formation of prepolymers, to add additives, thereby allowing the course of a subsequent substrate polymerization by chemical crosslinking of the prepolymers to be influenced in an advantageous way.

In a further advantageous embodiment of the method, the providing of the adhesive may take place such that, first of all, an acrylate-based base formulation is provided, comprising substantially acrylate monomers, and there is subsequent addition of additives which allow substrate polymerization with just a low energy input, such as UV irradiation, for example.

It is advantageous if the acrylates of the acrylate-based adhesive are selected from a class consisting of n-butyl acrylate, (methyl) methacrylate, acrylic acid, 2-ethylhexyl acrylate, isobornyl acrylate, 1,6-hexanediol diacrylate (HDDA) and/or modified acrylate resins, more particularly urethane acrylates and epoxy acrylates, in which chemical crosslinking takes place with low energy input, as a result of initiators.

The reaction time and the degree of crosslinking of the acrylated-based and/or silicone-based adhesive may be influenced in an advantageous way by means of fillers, photoinitiators, effect chemicals, such as pigments, magnetic substances or microbicide substances, thermally reactive initiators, moisture-reactive initiators, resins, more particularly HC (hydrocarbon), terpene resins, terpene-phenolic resins, acrylate resins, silicone resins and natural resins and/or reactive diluents, more particularly TMGDA (tetramethylene glycol diacrylate), TMPTA (trimethylolpropane triacrylate), TPGDA (tripropylene glycol diacrylate), DPHA (dipentaerythritol hexaacrylate) and/or DPHA-DEO.

When the adhesive is applied it is advantageous if the amount of adhesive applied is such that the layer thickness of the substrate-polymerized pressure-sensitive adhesive is between 25 to 3000 µm, more particularly 25-750 µm, preferably between 25 to 250 µm The spreading of the adhesive on the surface of the wall or floor covering allows uniform areal adhesion with a layer thickness of the substrate-polymerized pressure-sensitive adhesive of as low as 15 25 µm upwards. The adhesive can therefore be applied sparingly to the surface.

The viscosity of the adhesive may vary between 10 mPas and 100 Pas, and so various methods of applying the adhesive can be employed advantageously. These methods are spraying methods, impregnating methods, and also metering and coating methods. In this way, by varying the viscosity, the method can be integrated and employed in existing coating lines or installations.

A wall covering or floor covering produced according to the method of the invention comprises a substrate-polymerized layer of pressure-sensitive adhesive, based on acrylate and/or on silicone, which at least partly covers the surface of the wall or floor covering and has partly penetrated into the wall or floor covering up to a maximum depth, and is therefore firmly integrated in the wall or floor covering. This pressure-sensitive adhesive is preferably applied in the form of a film over the full area of the surface. Accordingly, the wall or floor covering can be detached without residue from the base, respectively from the underground, the adhesive remaining on the surface of the covering.

It is advantageous if the wall or floor covering exhibits an adhesive fracture on peeling in accordance with DIN EN 1372. Accordingly, when the floor covering is detached from a primed, filled floor plate, there is no destructive tearing of the adhesive (cohesion fracture), but instead there is residue-free detachment.

DIN 1372 describes a peel test on a floor covering of the invention which has been stored at 50°C for 3 days. In this case there is adhesive fracture, as shown by evaluation of the fracture modes. The pre-tensioning force in the peel test was 5 N and the test speed was 100 mm/min.

It is particularly advantageous if the wall or floor covering exhibits a fracture on a substrate on peeling in accordance with DIN EN 1372 with a peel resistance between 0.4-1 N/mm, preferably 0.4-0.75 N/mm. Consequently this floor covering can be detached from the underlying surface with particular ease, and is situated outside the range of peel resistance of a structural pressure-sensitive adhesive or a hotmelt.

It is further of advantage if the wall or floor covering has a tensile shear strength in accordance with DIN EN 1373 of at least 100 N, preferably between 450-650 N.

It is also of advantage if the wall or floor covering has a tensile shear strength of at least 0.2 N/mm², preferably between 0.5-0.75 N/mm², and/or a fracture strength under horizontal force exposure of at least 100 N, preferably between 450-650 N, in a tensile shear test in accordance with DIN EN 1373. The substrate-polymerized layer of pressure-sensitive adhesive in this case does not exhibit cold flow, as is the case, for example, for hotmelt adhesives with breaking strengths of 10-30 N and tensile shear strengths of 0.05-0.2 N/mm², which in the shear test are pressed into and out of the edge region of the covering.

On detachment, therefore, the wall or floor covering can be removed without residue from an underlying construction surface, without substantial force or additional work. At the same time, slipping on the underground is impossible, as is liquefying of the adhesive.

It is advantageous, if the adhesive on the wall covering or floor covering based on acrylate and/or on silicone is prepared by polymerizing a base formulation which comprises at least 5% to 90% by weight of an acrylate, of a silicone, of an acrylate mixture and/or of a silicone mixture, 5% to 40% by weight of a crosslinking agent or of a mixture of two or more crosslinking agents, and 0.1 % to 25% by weight of a photoinitiator or of a photoinitiator mixture.

Such an adhesive, which is preferably fluid, can be applied to the wall or floor covering, where it first spreads and then cures by substrate polymerization to give a pressure-sensitive adhesive. This adhesive may be induced to undergo a chemical crosslinking by just a slight input of energy, such as heat, radiation and the like, for example.

This crosslinking takes place with particular advantage when the base formulation comprises at least 5% to 90% by weight of 2-ethylhexyl acrylate as the acrylate agent and 5% to 40% by weight of acrylic acid as a crosslinking agent.

The invention is illustrated below with reference to exemplary embodiments, in relation to the attached drawings. In the drawings:
- Fig. 1: shows a diagram of a production-line for producing a reactive fluid adhesive;
- Fig. 2: shows a diagram of a production-line operated in accordance with the method of the invention,
- Fig. 3: shows a section of an inventive wall covering, and
- Fig. 4: shows a section of an inventive floor covering.

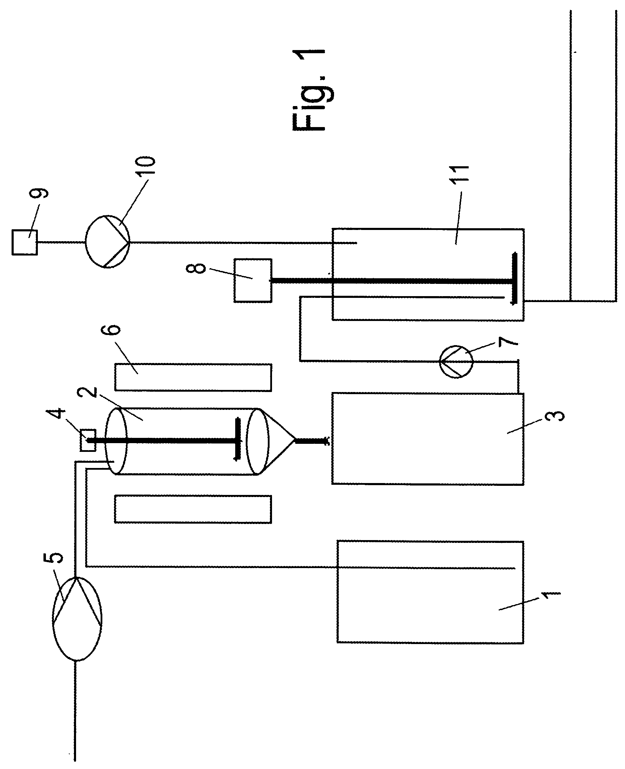

Figure 1 shows a step in the method of the invention in which a reactive fluid adhesive based on acrylate or on silicone is provided for application to a floor and/or wall covering. First of all, in a container 1, a base formulation is provided. This base formulation comprises acrylates and/or silicones such as, for example, n-butyl acrylate, (methyl) methacrylate, acrylic acid, 2-ethylhexyl acrylate, isobornyl acrylate, 1,6-hexanediol diacrylate (HDDA), modified acrylate resins (more particularly urethane acrylates and epoxy acrylates, and the like) and also silicone resins, which - as themselves or their prepolymers - are substrate-polymerizable.

The monomers in question are those containing the following reactive group:

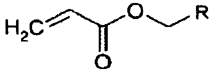

Substrate polymerization in this context is a linking of substantially linearly constructed polymer, prepolymer and monomer units by chemical reaction, with formation of a three-dimensional network.

Prepolymers differ from polymers in their relatively low average molar masses. In this context, prepolymers are to be understood as predominantly short-chain polymer strands of linear disposition.

A suitable adhesive is prepared by polymerizing a base formulation comprising at least 5% to 90% by weight, preferably 15-85% by weight, more preferably 60-85% by weight, of an acrylate, of a silicone, of an acrylate mixture and/or of a silicone mixture.

The base formulation further comprises 5% to 40% by weight, preferably 8-30% by weight, more preferably 10-20% by weight of a crosslinking agent or of a mixture of two or more crosslinking agents, and 0.1% to 25% by weight, preferably 1 -10% by weight, more preferably 3-8% by weight, of a photoinitiator or of a photoinitiator mixture.

One preferred adhesive base formulation, then, comprises, for example, 85% by weight of 2-ethylhexyl acrylate, 10% by weight of the crosslinking agent acrylic acid and 5% by weight of a photoinitiator which is a formulation of 20-30% by weight of bis(2,6-dimethoxybenzoyl)-2,4,4-trimethylpentylphosphine oxide and 70-80% by weight of 1-hydroxycyclohexyl phenyl ketone.

Additionally present in the base mixture may be fillers, photoinitiators, effect chemicals, such as pigments, magnetic substances or microbicide substances, thermally reacting initiators, moisture-reacting initiators, resins (hydrocarbon resins, terpene resins, terpene-phenolic resins, acrylate resins, silicone resins, natural resins and the like), reactive diluents (TMGDA, TMPTA, TPGDA, DPHA, DPHA-DEO and the like).

The acrylate- and/or silicone-containing mixture is subsequently transferred from the container 1 into a reaction vessel 2, in which a sub-atmospheric pressure prevails, generated by a vacuum pump 5.

A stirrer mechanism 4 provides a uniform dispersion of all of the ingredients in the base formulation, while this formulation is induced to polymerize by means of radiation, preferably UV radiation. UV irradiation may be realized by UV lighting means 6, and effects polymerization of the compounds employed. The prepolymer mixture obtained in this way has a higher viscosity than the base formulation.

Following this polymerization, the prepolymer mixture is transferred to an appropriate storage container 3, from where the fluid prepolymer mixture is transferred, using the pump 7, into a mixing vessel 11, in which the mixture is kept fluid by stirring, by means of a second stirrer mechanism 8, and in which additives may be added additionally from the second storage container 9 by means of a dosing pump 10.

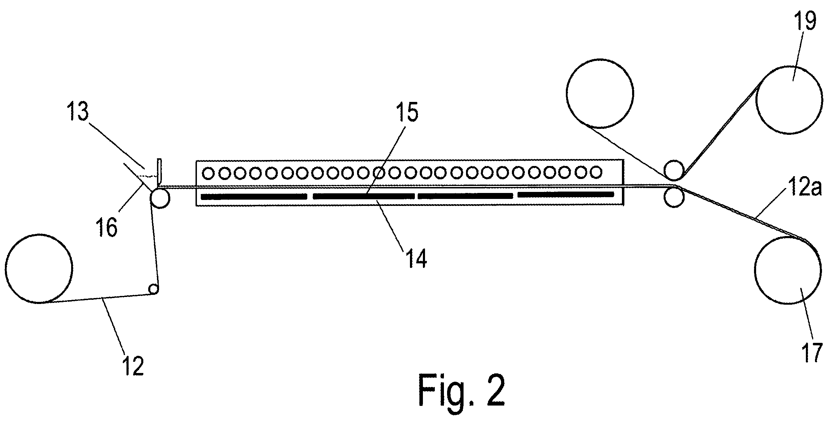

Figure 2 shows an apparatus which is operated in accordance with the method of the invention and, in the example chosen, produces a self-adhesive wallpaper 12a. The apparatus can also be used to make other roll products self-adhesive in accordance with the method described.

In a first method step, wallpaper 12 is provided in the form of a roll product, usually composed of one or more plies of paper, on which a pattern or a decorative layer of plastic or other materials has been applied. Other wall coverings, made for example of nonwoven webs, textile scrims or fabric webs, and also wall tattoos or the like, may likewise be utilized.

This is followed by the method step of providing a reactive fluid adhesive based on acrylate and/or on silicone. During the providing step, monomer formulations may even at this stage be pretreated in a polymerization procedure, with formation of prepolymer strands, as described back in Figure 1, this pretreatment being such that, following application to a surface, they form a network even with a low input of energy, as a result of an initiator.

Suitable initiators in this context are essentially all physical and chemical means that allow the starting of a free-radical or cationic polymerization reaction.

Alternatively or in addition to this it is possible for formulations of a reactive fluid adhesives to comprise acrylate monomers which have been modified in such a way that, under the influence of radiation or heat, they undergo polymerization to form three-dimensional networks on the surface of the wallpaper 12.

The polymerization reaction may be influenced, subsequent to the formation of prepolymers or modified acrylate monomers, by addition of additives. Suitable for this purpose are fillers, photoinitiators, effect chemicals, thermally reacting initiators, moisture-reacting initiators, resins (hydrocarbon resins, terpene resins, terpene-phenolic resins, acrylate resins, silicone resins, natural resins and the like), reactive diluents (TMGDA, TMPTA, TPGDA, DPHA, DPHA-DEO) and the like.

These additives reduce the fraction of acrylate prepolymers.

In a further step of the method, the reactive, fluid adhesive based on silicone or on acrylate is applied to the surface of a wall or floor covering. Depending on the viscosity of the adhesive and on the nature of the surface, this may be done by coating, spraying, impregnating and other application techniques.

The application technique which might be suitable in a specific case depends on the appearance of the product. Regardless of whether the product is a sheet product or roll product, it being possible in principle for both forms to be provided with the fluid adhesive.

As shown in Figure 2, the wallpaper 12 is first unrolled from a roll and then guided along beneath a coating unit 13.

The coating unit 13 performs the application of the reactive fluid adhesive 16 to the surface of the wallpaper 12.

In a subsequent step of the method, the fluid adhesive layer is spread on this surface.

Spreading means in this context the distribution of the fluid adhesive on the surface of the wall or floor covering and the penetration of the adhesive to a certain extent into the surface of the wall or floor covering, during its distribution on the surface.

Depending on the distributing behaviour and depth of penetration of the adhesive, the spreading section between the coating unit 13 and an irradiation unit 14 may be less than 50%, preferably less than 20%, more preferably less than 10%, based on the subsequent irradiation section in the irradiation unit 14. A further variant for optimizing the spreading behaviour is the adjustment of the spreading time through control of the transport speed. The spreading time and the spreading section is the distance and the time of the adhesive to be spreaded out on the surface after its application and before the substrate-polymerisation has been initiated.

The spreading behaviour may be dependent by the nature of the adhesive, the thickness of the applied layer of adhesive, and the nature of the surface of the wall or floor covering, in order to achieve a depth of penetration into the material of the said covering.

The viscosity of the adhesive in this case is between 10 mPa·s and 100 Pa·s, more particularly between 0.1 Pa·s - 10 Pas, preferably between 0.2-1 Pa·s.

In a further step the adhesive is subjected to substrate-polymerization, as a result of which, through chemical crosslinking, it is converted into a pressure-sensitive adhesive. In the course of the substrate polymerization inclusions of the surface-material of the respective wall or floor in the structure of the network of the adhesive layer may be formed. The material in this case may preferably be paper or plastic, such as PVC, for example. In this exemplary embodiment, the polymerization is initiated by an energy input of radiation in the UV range (wavelength = 1-380 nm, preferably 100-380 nm).

The wallpaper 12 with the spreaded adhesive 16 is passed along a radiation tunnel with UV lamps. The UV irradiation causes the molecules of adhesive to undergo uniform crosslinking to form a three-dimensional network. This irradiation takes place at a constant temperature, made possible by the cooling system 15.

As well as UV radiation, heat, visible light, infrared radiation, moisture, electron beams and induction may also serve as initiators for a substrate polymerization. UV radiation, however, is particularly preferred.

Following the application of the adhesive composition and the substrate polymerization, in a further processing step, an outer sheet may be applied to the self-adhesive surface in order to prevent the adhesion, for example, of dust and the like. In that case the outer sheet is taken from a roll 19 and applied to the self-adhesive surface of the wallpaper 12a. The wallpaper product in its ready-for-sale form is rolled up onto the roll 17 and can be stored for a long time.

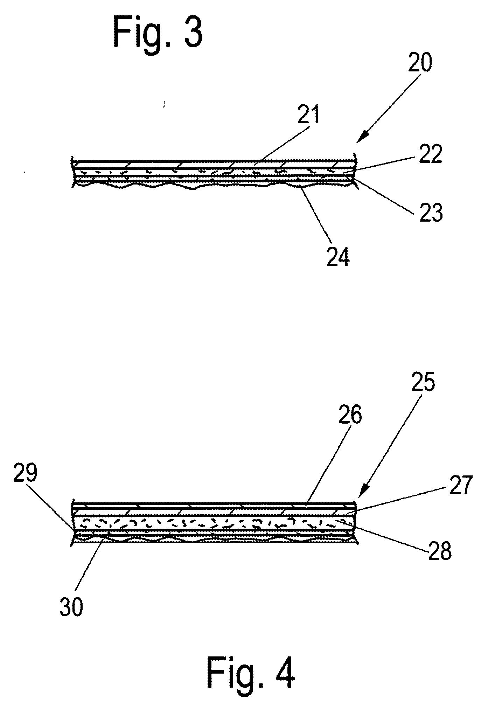

Figure 3 shows a wall covering 20 produced in accordance with the method of the invention. On its facing side it has a pattern layer 21. Arranged beneath this is a support layer 22 made of paper. Disposed on the support layer 22 is a substrate-polymerized film 23 of pressure-sensitive adhesive, which is connected in an abrasion-resistant fashion to the support layer 22. Disposed beneath the layer 23 of pressure-sensitive adhesive is a film 24. When the wall covering is applied to a wall, the film 24 is removed and the side of the layer 23 of pressure-sensitive adhesive is pressed onto the wall.

Figure 4 shows a floor covering 25 produced in accordance with the method of the invention. On its top side, this floor covering 25 first has a wear layer 26, which is intended in particular to prevent damage to the floor covering by mechanical load and the like. Beneath the wear layer 26 there follows the decorative layer 27. This may be, for example, a decorative paper. Disposed beneath the decorative layer 27 is a support layer or support plate 28. This layer is, for example, a PVC sheet board or wooden board. It is followed by a substrate-polymerized film 29 of pressure-sensitive adhesive, which is joined in an abrasion-resistant fashion, by crosslinking, to the support plate 28 lying above it. Lastly, the film 29 of pressure-sensitive adhesive is covered on the bottom side by a film 30. The floor covering can be laid in the same way as for the wall covering. In the case of mistaken laying, individual segments of the floor covering can be removed without residue from the underground, and used again. Moreover, the displacement of individual segments as a result of thermoplastic softening of the adhesive is prevented.

The floor coverings may be adhered, for example, to cementitious substrates, primer coats and laying panels.

Examples of wall and floor coverings which can be used include linoleum, PVC, carpet, tiles, wood-block flooring, laminate, rubber coverings, other plastic and natural coverings, decorative wallpapers, textile wallpapers, glass-fibre wallpapers, and other wall applications.

It is also possible for wall and floor coverings with a width of 5 m or more to be provided with a self-adhesive surface by the method of the invention.

The pressure-sensitive adhesive has an extensibility of up to 700%, preferably up to 400%, as a result of which even flexible floor coverings, such as linoleum and carpets, for example, can be coated on the underside with a pressure-sensitive adhesive of this kind.

### List of reference numerals

- 1: Container
- 2: Reaction vessel
- 3: Storage Container
- 4: Stirrer mechanism
- 5: Vacuum pump
- 6: UV lighting means
- 7: Transfer pump
- 8: Stirrer mechanism
- 9: Storage Container
- 10: Dosing pump
- 11: Mixing vessel
- 12: Roll product
- 12a: Self-adhesively coated roll product
- 13: Coating unit
- 14: Irradiation unit
- 15: Cooling System
- 16: Adhesive
- 17: Roll
- 19: Roll
- 20: Wall covering
- 21: Pattern layer
- 22: Support layer
- 23: Film of pressure-sensitive adhesive
- 24: Film
- 25: Floor covering
- 26: Wear layer
- 27: Decorative layer
- 28: Support plate
- 29: Film of pressure-sensitive adhesive
- 30: Film

## Claims

1. Method of producing a self-adhesive surface on a wall covering (20) or floor covering (25), **characterized by** the following steps:
i. providing a wall covering (20) or floor covering (25) and where
- the wall covering (20) has on his facing side a pattern layer (21) and arranged beneath this there is a support layer (22) made of paper and furthermore disposed on the support layer (22) there is a substrate-polymerized film (23) of pressure-sensitive adhesive (29)
and
- the floor covering (25) has on its topside a wear layer (26) and beneath the wear layer (26) follows a decorative layer (27) and moreover beneath the decorative layer (27) there is a support layer or a support plate (28), where it is followed by a substrate-polymerized film (23) of pressure-sensitive adhesive (29);
ii. providing a reactive fluid adhesive (16) based on acrylate and/or on silicone,
iii. applying the adhesive (16) to the surface of the wall covering (20) or floor covering (25) which is to be bonded to a base,
iv. spreading the adhesive (16) on the surface, and
v. substrate-polymerizing the adhesive (16) to form a pressure-sensitive adhesive (23, 29) by chemical crosslinking of the adhesive (16) by means of energy, using at least one initiator

2. Method according to claim 1, **characterized in that** the adhesive (16) is applied substantially solvent-free to the surface of the wall covering or floor covering (12).

3. Method according to claim 1 or 2, **characterized in that** the energy is supplied in the form of radiation, more particularly IR radiation and UV radiation, heat and/or induction.

4. Method according to any of the preceding claims, **characterized in that** the providing of the adhesive (16) takes place in accordance with the following steps:
i.i providing an acrylate-based and/or silicone-based base formulation,
i.ii reacting the constituents of the base formulation to give prepolymers by UV-initiated polymerization.

5. Method according to claim 4, **characterized in that** the reacting of the base formulation in step i.ii takes place in an inert atmosphere.

6. Method according to any of the preceding claims 4 to 5, **characterized in that** the reacting of the base formulation to give prepolymers is followed by the adding of additives for a Substrate polymerization of the adhesive (16) to give pressure-sensitive adhesive (23, 29) according to step v.

7. Method according to any of the preceding claims 1 to 3, **characterized in that** the providing of the adhesive (16) takes place in accordance with the following steps:
i.i providing an acrylate-based base formulation which contains substantially acrylate monomers and
i.ii adding additives for a substrate polymerization of the acrylate monomers to give a pressure-sensitive adhesive (23, 29).

8. Method according to any of the preceding claims, **characterized in that** the acrylate-based base formulation is selected from a class consisting of n-butyl acrylate, (methyl) methacrylate, acrylic acid, 2-ethylhexyl acrylate, isobornyl acrylate, 1,6-hexanediol diacrylate (HDDA) and/or modified acrylate resins, more particularly urethane acrylates and epoxy acrylates, and also mixtures thereof.

9. Method according to any of the preceding claims, **characterized in that** the adhesive (16) further comprises fillers, photoinitiators, effect chemicals, thermally reactive initiators, moisture-reactive initiators, resins, more particularly HC (hydrocarbon), terpene, terpene-phenolic, acrylate, silicone and/or natural resins, and/or reactive diluents, more particularly TMGDA (tetramethylene glycol diacrylate), TMPTA (trimethylolpropane triacrylate), TPGDA (tripropylene glycol diacrylate), DPHA (dipentaerythritol hexaacrylate) and/or DPHA-DEO.

10. Method according to any of the preceding claims, **characterized in that** the applying of the reactive fluid adhesive (16) takes place such that the layer thicknesses of the substrate-polymerized pressure-sensitive adhesive (23, 29) are between 25 to 3000 µm, preferably between 25 to 250 µm.

11. Method according to any of the preceding claims, **characterized in that** the applying of the reactive fluid adhesive (16) takes place such that the layer thicknesses of the substrate-polymerized pressure-sensitive adhesive (23, 29) is less than 200 µm.

## Patentansprüche

1. Verfahren zur Herstellung einer selbstklebenden Oberfläche auf einem Wandbelag (20) oder einem Bodenbelag (25), **gekennzeichnet durch** die folgenden Schritte:
i. Bereitstellen eines Wandbelages (20) oder eines Bodenbelages (25) und wobei
- der Wandbelag (20) auf seiner Sichtseite eine Musterschicht (21) aufweist und unter dieser eine Trägerschicht (22) angeordnet ist, die aus Papier besteht, und des Weiteren auf der Trägerschicht (22) ein substratpolymerisierter Film (23) eines Haftklebstoffes (29) angeordnet ist
und
- der Bodenbelag (25) auf seiner Oberseite eine Abnutzungsschicht (26) aufweist und unter der Abnutzungsschicht (26) eine Dekorschicht (27) folgt und des Weiteren unter der Dekorschicht (27) eine Trägerschicht oder eine Trägerplatte (28) liegt, wo ihr ein substratpolymerisierter Film (23) eines Haftklebstoffes (29) folgt,
ii. Bereitstellen eines reaktiven Klebstofffluids (16) auf Acrylat- und/oder Silikonbasis,
iii. Aufbringen des Klebstoffs (16) auf der Oberfläche des Wandbelages (20) oder des Bodenbelages (25), der an eine Grundlage gebunden werden soll,
iv. Verteilen des Klebstoffs (16) auf der Oberfläche und
v. Substratpolymerisieren des Klebstoffs (16), um **durch** chemisches Vernetzen des Klebstoffs (16) mit Hilfe von Energie unter Verwendung mindestens eines Initiators einen Haftklebstoff (23, 29) zu bilden.

2. Verfahren nach Anspruch 1, **dadurch gekennzeichnet, dass** der Klebstoff (16) im Wesentlichen lösemittelfrei auf die Oberfläche des Wandbelages oder des Bodenbelages (12) aufgebracht wird.

3. Verfahren nach Anspruch 1 oder 2, **dadurch gekennzeichnet, dass** die Energie in Form von Strahlung zugeführt wird, insbesondere von Infrarot- und UV-Strahlung, Wärme und/oder Induktion.

4. Verfahren nach einem der vorhergehenden Ansprüche, **dadurch gekennzeichnet, dass** das Bereitstellen des Klebstoffs (16) in Übereinstimmung mit den folgenden Schritten stattfindet:
i.i Bereitstellen einer Basisformulierung auf Acrylat- und/oder Silikonbasis,
i.ii Verreagieren der Bestandteile der Basisformulierung, um durch von UV-Licht ausgelöste Polymerisation Vorpolymere zu erhalten.

5. Verfahren nach Anspruch 4, **dadurch gekennzeichnet, dass** das Verreagieren der Basisformulierung in Schritt i.ii in einer inerten Umgebung stattfindet.

6. Verfahren nach einem der vorhergehenden Ansprüche 4 bis 5, **dadurch gekennzeichnet, dass** dem Verreagieren der Basisformulierung für den Erhalt von Vorpolymeren das Zusetzen von Additiven für eine Substratpolymerisation des Klebstoffs (16) folgt, um Haftklebstoff (23, 29) gemäß Schritt V zu erhalten.

7. Verfahren nach einem der vorhergehenden Ansprüche 1 bis 3, **dadurch gekennzeichnet, dass** das Bereitstellen des Klebstoffs (16) in Übereinstimmung mit den folgenden Schritten stattfindet:
i.i Bereitstellen eine Basisformulierung auf Acrylatbasis, die im Wesentlichen Acrylatmonomere enthält, und
i.ii Zusetzen von Additiven für eine Substratpolymerisation der Acrylatmonomere, um einen Haftklebstoff (23, 29) zu erhalten.

8. Verfahren nach einem der vorhergehenden Ansprüche, **dadurch gekennzeichnet, dass** die Basisformulierung auf Acrylatbasis aus einer Klasse ausgewählt wird, die aus Folgendem besteht: n-Butylacrylat, (Methyl)methacrylat, Acrylsäure, 2-Ethylhexylacrylat, Isobornylacrylat, 1,6-Hexandioldiacrylat (HDDA) und/oder modifizierten Acrylatharzen, insbesondere Urethanacrylate und Epoxidacrylate, und außerdem Mischungen daraus.

9. Verfahren nach einem der vorhergehenden Ansprüche, **dadurch gekennzeichnet, dass** der Klebstoff (16) ferner Folgendes umfasst: Füllstoffe, Fotoinitiatoren, Effektchemikalien, thermisch reaktive Initiatoren, feuchtigkeitsreaktive Initiatoren, Harze, insbesondere HC- (Kohlenwasserstoff), Terpen-, Terpenphenol-, Acrylat-, Silikon- und/oder natürliche Harze, und/oder reaktive Verdünner, insbesondere TMGDA (Tetramethylenglycoldiacrylat), TMPTA (Trimethylolpropantriacrylat), TPGDA (Tripropylenglycoldiacrylat), DPHA (Dipentaerythritolhexaacrylat) und/oder DPHA-DEO.

10. Verfahren nach einem der vorhergehenden Ansprüche, **dadurch gekennzeichnet, dass** das Aufbringen des reaktiven Klebstofffluids (16) derart stattfindet, dass die Schichtdicken des substratpolymerisierten Haftklebstoffs (23, 29) zwischen 25 bis 3000 µm liegen, vorzugsweise zwischen 25 bis 250 µm.

11. Verfahren nach einem der vorhergehenden Ansprüche, **dadurch gekennzeichnet, dass** das Aufbringen des reaktiven Klebstofffluids (16) derart stattfindet, dass die Schichtdicken des substratpolymerisierten Haftklebstoffs (23, 29) geringer als 200 µm sind.

## Revendications

1. Procédé de production d'une surface auto-adhésive sur un revêtement mural (20) ou un revêtement de sol (25), **caractérisé par** les étapes suivantes :
i. fourniture d'un revêtement mural (20) ou d'un revêtement de sol (25) et où
- le revêtement mural (20) possède sur son côté face une couche de motifs (21) et agencée en-dessous de celle-ci se trouve une couche de support (22) constituée de papier et également disposée sur la couche de support (22) se trouve un film polymérisé sur un substrat (23) à base d'adhésif sensible à la pression (29)
et
- le revêtement de sol (25) possède sur son côté supérieur une couche d'usure (26) et en-dessous de la couche d'usure (26) suit une couche décorative (27) et également en-dessous de la couche décorative (27) se trouve une couche de support ou une plaque de support (28), où elle est suivie d'un film polymérisé sur un substrat (23) à base d'adhésif sensible à la pression (29) ;
ii. fourniture d'un adhésif liquide réactif (16) à base d'acrylate et/ou de silicone,
iii. application de l'adhésif (16) sur la surface du revêtement mural (20) ou du revêtement de sol (25) qui doit être collé à une base,
iv. étalement de l'adhésif (16) sur la surface, et
v. polymérisation sur substrat de l'adhésif (16) pour former une adhésif sensible à la pression (23, 29) par réticulation chimique de l'adhésif (16) au moyen d'énergie, en utilisant au moins un initiateur.

2. Procédé selon la revendication 1, **caractérisé en ce que** l'adhésif (16) est appliqué sensiblement sans solvant sur la surface du revêtement mural ou du revêtement de sol (12).

3. Procédé selon la revendication 1 ou 2, **caractérisé en ce que** l'énergie est fournie sous la forme de rayonnement, plus particulièrement sous forme de rayonnement IR et de rayonnement UV, de chaleur et/ou d'induction.

4. Procédé selon l'une quelconque des revendications précédentes, **caractérisé en ce que** la fourniture de l'adhésif (16) se déroule selon les étapes suivantes :
i.i fourniture d'une formulation de base à base d'acrylate et/ou de silicone,
i.ii réaction des constituants de la formulation de base pour donner des prépolymères par polymérisation initiée par rayonnement UV.

5. Procédé selon la revendication 4, **caractérisé en ce que** la réaction de la formulation de base dans l'étape i.ii a lieu sous une atmosphère inerte.

6. Procédé selon l'une quelconque des revendications précédentes 4 à 5, **caractérisé en ce que** la réaction de la formulation de base pour donner des prépolymères est suivie de l'addition d'additifs pour une polymérisation sur substrat de l'adhésif (16) pour donner l'adhésif sensible à la pression (23, 29) selon l'étape v.

7. Procédé selon l'une quelconque des revendications précédentes 1 à 3, **caractérisé en ce que** la fourniture de l'adhésif (16) se déroule selon les étapes suivantes :
i.i fourniture d'une formulation de base à base d'acrylate qui contient sensiblement des monomères d'acrylate et
i.ii addition d'additifs pour une polymérisation sur substrat des monomères d'acrylate pour donner un adhésif sensible à la pression (23, 29).

8. Procédé selon l'une quelconque des revendications précédentes, **caractérisé en ce que** la formulation de base à base d'acrylate est choisie dans une classe constituée par l'acrylate de n-butyle, le (méthyl)méthacrylate, l'acide acrylique, l'acrylate de 2-éthylhexyle, l'acrylate d'isobornyle, le diacrylate de 1,6-hexanediol (HDDA) et/ou les résines acrylates modifiées, plus particulièrement les uréthane acrylates et les époxy acrylates, et également leurs mélanges.

9. Procédé selon l'une quelconque des revendications précédentes, **caractérisé en ce que** l'adhésif (16) comprend en outre des matières de remplissage, des photo-initiateurs, des produits chimiques à effet, des initiateurs réactifs à la chaleur, des initiateurs réactifs à l'humidité, des résines, plus particulièrement le HC (hydrocarbure), le terpène, le terpène phénolique, l'acrylate, la silicone et/ou les résines naturelles, et/ou les diluants réactifs, plus particulièrement le TMGDA (diacrylate de tétraméthylène glycol), le TMPTA (triacrylate de triméthylolpropane), le TPGDA (diacrylate de tripropylène glycol), le DPHA (hexaacrylate de dipentaérythritol) et/ou le DPHA-DEO.

10. Procédé selon l'une quelconque des revendications précédentes, **caractérisé en ce que** l'application de l'adhésif liquide réactif (16) a lieu de telle sorte que les épaisseurs de couche de l'adhésif polymérisé sur substrat sensible à la pression (23, 29) sont comprises entre 25 et 3 000 µm, de préférence entre 25 et 250 µm.

11. Procédé selon l'une quelconque des revendications précédentes, **caractérisé en ce que** l'application de l'adhésif liquide réactif (16) a lieu de telle sorte que les épaisseurs de couche de l'adhésif polymérisé sur substrat sensible à la pression (23, 29) sont inférieures à 200 µm.
